# EUROPEAN PATENT APPLICATION

(11) **EP 3 285 175 A2**
(43) Date of publication of application: **21.02.2018**
(21) Application number: 17191856.8
(22) Date of filing: 27.09.2013
(51) Int. Cl.: G06F 15/16, G06F 3/14

(54) **MULTIPLE-DEVICE SCREEN CAPTURE**

(30) Priority: 28.09.2012 US 201213630569
(62) Divisional of application: 13841820.7
(71) Applicant: INTEL Corporation, Santa Clara, CA 95054-1549 (US)
(72) Inventor: NEEDHAM, Bradford H., North Plains, Oregon 97133 (US)
(74) Representative: HGF Limited

(57) **Abstract**

Various embodiments are generally directed to cooperation among networked devices to perform a multiple-device screen capture in which multiple devices capture what is visually presented on their displays substantially simultaneously. A method comprises transmitting timing information via a network to a first participating device and a second participating device to trigger the first participating device to capture a first image of what is visually presented on a display of the first participating device and the second participating device to capture a second image of what is visually presented on a display of the second participating device substantially simultaneously; and transmitting collection device information via the network to the first and second participating devices specifying a collection device to receive the first and second images. Other embodiments are described and claimed herein.

## Description

### Background

The simultaneous use of multiple computing devices by individuals or small groups of individuals to perform tasks that have traditionally been performed using only a single computing device has become commonplace. Whereas before, it was commonplace to use only a single computing device at any given time to work with email, initiate financial transactions, play computer-based games or view audio/visual content, the ever falling costs of computing devices and their ever increasing portability has encouraged their use as sets of computing devices in which what each visually presents on their displays may be different, but must be coordinated. This presents challenges to the efficacy of the use of screen captures of what is visually presented by the display of a single computing device, either as a diagnostics tool, or to memorialize something that is visually presented for future reference.

By way of example, it has become commonplace for one person to interact with a single email account through simultaneous use of a desktop computing device at their desk, and one or both of a laptop-style portable computing device and a pocket-sized portable computing device away from their desk, thereby effectively distributing the user interface through which that one person interacts with their email across multiple displays of those multiple computing devices. By way of another example, it has become commonplace for groups of people to play multiple-person computer-based games in which various portions of that game are performed by separate computing devices in the possession of different ones of those people, each of which may visually present only some of the activity (or a different perspective of the activity) of that game.

### Brief Description of the Drawings

**FIG. 1** illustrates a first embodiment of interaction among computing devices.
**FIG. 2** illustrates a portion of the embodiment of FIG. 1.
**FIG. 3** illustrates a second embodiment of interaction among computing devices.
**FIG. 4** illustrates a third embodiment of interaction among computing devices.
**FIG. 5** illustrates a portion of the embodiment of FIG. 4.
**FIG. 6** illustrates an embodiment of a first logic flow.
**FIG. 7** illustrates an embodiment of a second logic flow.
**FIG. 8** illustrates an embodiment of a third logic flow.
**FIG. 9** illustrates an embodiment of a fourth logic flow.
**FIG. 10** illustrates an embodiment of a processing architecture.

### Detailed Description

Various embodiments are generally directed to cooperation among networked computing devices to perform a coordinated capture of images of what is visually presented by the displays of those networked computing devices to create a visual record of what is being visually presented by those networked computing devices at a given time. Some embodiments are particularly directed to interaction among two or more computing devices to cause the capture of images presented by their respective displays to occur substantially simultaneously.

More specifically, in response to receipt of a signal from a computing device in the role of an initiating device, multiple computing devices in the role of participating devices coordinate through a network the timing at which each of the participant devices performs a screen capture of the visual image that each visually presents on their displays. Following their performances of their respective screen captures, at least one of the participating devices transmit their captured visual images to at least one other computing device to enable the captured visual images to be aggregated for visual presentation. Which computing devices are selected to participate may be determined via responses from their user(s) to requests presented to their user(s) for agreement to participate and/or by referring to data comprising a list of computing devices that may so participate. Depending on the circumstances, the initiating device may be one of the participating devices, and/or the computing device to which one or more of the captured visual images are sent may be a collection device that is separate from any of the initiating device and/or any of the participating devices. The aggregation of captured visual images may include creating a slideshow, an index of images, a collage of images or any of a variety of other forms of visual presentation. Also, the content of one or more of the captured images may be restricted in response to restriction data specifying content that is not permitted to be included in a screen capture.

In one embodiment, for example, a method comprises transmitting timing information via a network to a first participating device and a second participating device to trigger the first participating device to capture a first image of what is visually presented on a display of the first participating device and the second participating device to capture a second image of what is visually presented on a display of the second participating device substantially simultaneously; and transmitting collection device information via the network to the first and second participating devices specifying a collection device to receive the first and second images. Other embodiments are described and claimed herein.

With general reference to notations and nomenclature used herein, portions of the detailed description which follows may be presented in terms of program procedures executed on a computer or network of computers. These procedural descriptions and representations are used by those skilled in the art to most effectively convey the substance of their work to others skilled in the art. A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, these manipulations are often referred to in terms, such as adding or comparing, which are commonly associated with mental operations performed by a human operator. However, no such capability of a human operator is necessary, or desirable in most cases, in any of the operations described herein that form part of one or more embodiments. Rather, these operations are machine operations. Useful machines for performing operations of various embodiments include general purpose digital computers as selectively activated or configured by a computer program stored within that is written in accordance with the teachings herein, and/or include apparatus specially constructed for the required purpose. Various embodiments also relate to apparatus or systems for performing these operations. These apparatus may be specially constructed for the required purpose or may comprise a general purpose computer. The required structure for a variety of these machines will appear from the description given.

Reference is now made to the drawings, wherein like reference numerals are used to refer to like elements throughout. In the following description, for purposes of explanation, numerous specific details are set forth in order to provide a thorough understanding thereof. It may be evident, however, that the novel embodiments can be practiced without these specific details. In other instances, well known structures and devices are shown in block diagram form in order to facilitate a description thereof. The intention is to cover all modifications, equivalents, and alternatives within the scope of the claims.

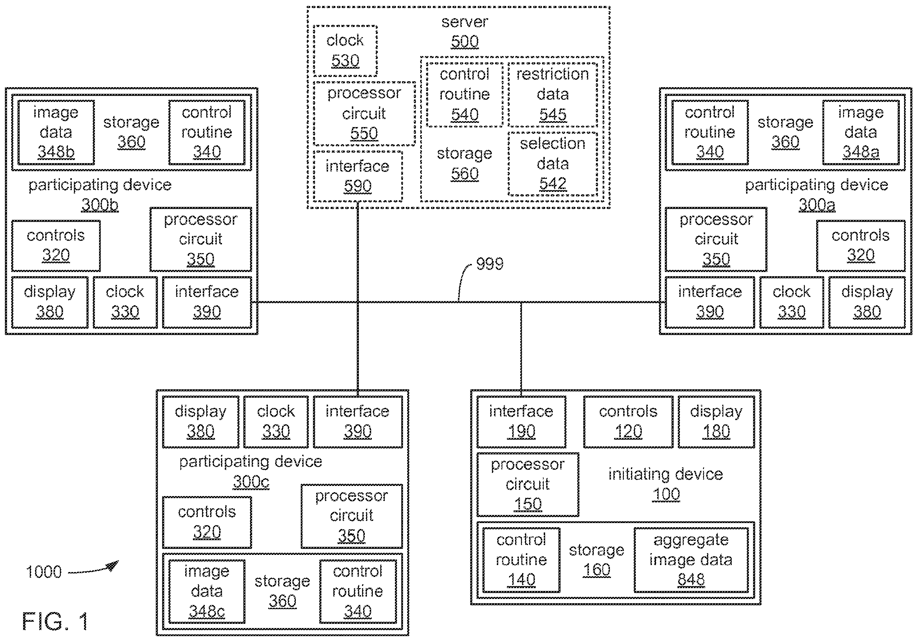

**Figure 1** illustrates a block diagram of a screen capture system 1000 comprising one or more of an initiating device 100, multiple participating devices 300a-c, and possibly also a server 500. Each of the computing devices 100, 300a-c and 500 may be any of a variety of types of computing device, including without limitation, a desktop computer system, a data entry terminal, a laptop computer, a netbook computer, a tablet computer, a handheld personal data assistant, a smartphone, a mobile device, a body-worn computing device incorporated into clothing, a computing device integrated into a vehicle, a server, a cluster of servers, a server farm, etc. As depicted, the computing devices 100, 300a-c and 500 exchange signals concerning a multiple-device screen capture through a network 999. In various embodiments, the network 999 may be a single network possibly limited to extending within a single building or other relatively limited area, a combination of connected networks possibly extending a considerable distance, and/or may include the Internet. Thus, the network 999 may be based on any of a variety (or combination) of communications technologies by which signals may be exchanged, including without limitation, wired technologies employing electrically and/or optically conductive cabling, and wireless technologies employing infrared, radio frequency or other forms of wireless transmission.

In various embodiments, and as will be explained in greater detail, the initiating device 100 signals the participating devices 300a-c through the network 999 to perform a multiple-device screen capture in which each of the participating devices 300a-c is triggered to capture an image of what each visually presents on their respective displays 380 at substantially the same time. The selection of which computing devices are to participate in this multiple-device screen capture may entail the initiating device 100 signaling each of the participating devices 300a-c through the network 999 with a command to present a request for their user(s) to agree to the capturing of what is visually presented on their respective displays 380. Alternatively or additionally, the selection of computing devices to participate in this multiple-device screen capture may entail the initiating device 100 referring to a selection data 542 for information identifying computing devices associated with a specific user and/or a list of computing devices currently in use to access data associated with a specific user, such as a user account (e.g., an email account, a database access account, a "to do list" stored in a storage associated with a specific person, etc.).

Upon selection of computing devices to participate in this multiple-device screen capture (and presuming, for sake of this discussion, that all three of the participating devices 300a-c are selected), the initiating device 100 signals the selected computing devices (the participating devices 300a-c, in this example) to effect coordination of the time at which they arc triggered to capture images substantially simultaneously as part of performing this multiple-device screen capture. This coordination of time may entail the initiating device 100 initially signaling the participating devices 300a-c through the network 999 to prepare to receive a subsequent signal to be broadcast from the initiating device 100 as a trigger for each of the participating devices 300a-c to capture their respective images. Alternatively, this coordination of time may entail the initiating device 100 signaling each of the participating devices 300a-c through the network 999 to time their respective screen captures to occur at a common specific upcoming time, perhaps specifying a time server (e.g., the server 500, if present) that is accessible through the network 999 and provides a recurringly updated indication of the current time maintained by a clock (e.g., one of the time servers coupled to one of the various atomic clocks maintained by various governments around the world).

Upon the capturing of images of what is visually presented on their respective displays 380 as image data 348a-c, the participating devices 300a-c transmit their respective ones of the image data 348a-c to the initiating device 100 through the network 999 (or possibly to another computing device, not shown, that is accessible via the network 999 and is serving in the role of a collection device). Each one of the image data 348a-c may incorporate metadata identifying the respective ones of the participating devices 300a-c from which each was transmitted and/or metadata identifying a user or users associated with each of the participating devices 300a-c. The initiating device 100 aggregates each one of the image data 348a-c into an aggregate image data 848, and displays the aggregate image data 848 on its display 180. The aggregate image data 848 may comprise a slideshow presentation, an indexed database, or any of a variety of other forms of visual arrangement or organization of the captured images received from the participating devices 300a-c. Further, the aggregate image data 848 may also comprise metadata received from each of the participating devices 300a-c (perhaps as part of each of the captured images of the image data 348a-c) enabling a visual presentation of information identifying which of each of the captured images came from which of each of the participating devices 300a-c.

In various embodiments, the initiating device 100 comprises a storage 160 storing a control routine 140 and the aggregate image data 848, a processor circuit 150, controls 120, the display 180, and an interface 190 coupling the initiating device 100 to the network 999. In executing a sequence of instructions of at least the control routine 140, the processor circuit 150 is caused to monitor the controls 120 to enable a user of the initiating device 100 to operate the controls 120 to signal the processor circuit 150 with a command to initiate a multiple-device screen capture. Upon being so signaled, the processor circuit 150 operates the interface 190 to transmit the aforementioned signals to the participating devices 300a-c via the network 999 to select participating devices and/or coordinate timing for a multiple-device screen capture.

Selection of computing devices to participate in a multiple-device screen capture may or may not entail the processor circuit 150 being caused to operate the interface 190 to signal one or more of the participating devices 300a-c and/or the server 500 (if present) to obtain information needed to identify what computing devices are to participate. In embodiments in which a list of computing devices that are permitted to be included in a multiple-device screen capture is employed, the processor circuit 150 is caused by the control routine 140 to refer to the selection data 542 to retrieve data identifying what computing devices may participate in a multiple-device screen capture. The selection data 542 may be stored within the storage 160 of the initiating device 100, itself, thereby enabling access to such a list without communication via the network 999. Alternatively and as depicted, the selection data 542 may be maintained by the server 500 (in embodiments in which the server 500 is present), and the processor circuit 150 may be caused to operate the interface 190 to signal the server 500 via the network 999 to retrieve such a list. The identities of which computing devices are indicated in the selection data 542 as permitted to participate may be based on what computing devices are known to be associated with a specific user of computing devices, or what computing devices are currently known to be in use to access a common piece of data known to be associated with a specific user (e.g., data stored by that user on a network drive, an email or financial account associated with that user, etc.).

In embodiments in which the agreement of user(s) of one or more of the participating devices 300a-c is to be sought, the processor circuit 150 is caused by the control routine 140 to operate the interface 190 to transmit signals to one or more of the participating devices 300a-c to cause them to present their user(s) with a request for their agreement to participation in a multiple-device screen capture including images visually presented by that one or more of the participating devices 300a-c. Which computing devices are to be signaled to present such a request may be manually selected by the user of the initiating device 100, possibly through operation of the controls 120, or may be determined by identities of computing devices indicated in the selection data 542 as permitted to participate. The processor circuit 150 is then further caused to monitor the interface 190 for receipt of indications of responses to those requests to determine which ones of the participating devices 300a-c will be selected to participate (i.e., which ones will serve in the role of "participating devices" -- for sake of this depicted example, it is presumed that all three of the participating devices 300a-c are to participate). It may be that the request is caused to include an indication of why the multi-device screen capture is being performed and/or what use the captured images will be put to. Alternatively or additionally, the request may indicate that less than all of what is visually displayed on a given screen will be captured, perhaps the capture will be limited to a portion of the screen on which imagery related to a particular piece of software and/or function is visually presented, or perhaps the capture will be limited as by avoiding capturing a portion of the screen on which imagery related to a particular piece of software and/or function is visually presented.

Regardless of the manner in which the participating devices 300a-c are selected to participate in a multiple-device screen capture, the processor circuit 150 is then caused to operate the interface 190 to signal the participating devices 300a-c to cause each of them to perform their respective screen captures making up the multiple-device screen capture with coordinated timings so as to cause all of those screen captures to occur substantially simultaneously. In embodiments in which timing coordination is performed by the initiating device 100, the processor circuit 150 is caused by the control routine 140 to signal each of the participating devices 300a-c via the network 999 to prepare to receive a triggering signal from the initiating device 100 to trigger each of them to perform their respective captures of images of what is visually presented on their respective ones of the displays 380. It may be that the triggering signal is a common triggering signal transmitted to all of the participating devices 300a-c where the technology and/or protocols of the network 999 enable such a common triggering signal, and where the technology and/or protocols of the network 999 are such that there is a reasonable expectation that such a common triggering signal will be received by all of the participating devices 300a-c substantially simultaneously to enable their respective screen captures to be triggered substantially simultaneously. In embodiments in which timing coordination is performed using a specific upcoming time as the trigger, the processor circuit 150 is caused to signal each of the participating devices 300a-c to perform their individual screen captures at a common upcoming time specified in the signals sent to each of them. The specified time may be selected to be sufficiently far into the future from the time at which the participating devices 300a-c are so signaled so as to ensure that each of the participating devices 300a-c will receive those signals with sufficient time remaining as to be able to perform their respective screen captures at the specified time. The signal(s) to the participating devices 300a-c specifying a time as a trigger may also specify a time server (e.g., the server 500, if present) by which each of the participating devices 300a-c is to synchronize their clocks 330 to aid in ensuring that their respective screen captures are triggered substantially simultaneously by the arrival of the specified time. It should be noted that such signals as may be sent to the participating devices 300a-c to effect this coordination of timing may be the same signal(s) that may be sent to the participating devices 300a-c to effect selection of participants. Further, those very same signals may also include an indication of what computing device serves in the role of "collection device" that each of the participating devices 300a-c are to transmit their captured imagery to (in this example, that computing device is the initiating device 100).

Regardless of the manner in which the initiating device 100 signals the participating devices 300a-c to effect timing coordination, the processor circuit 150 is then caused to monitor the interface 190 for the receipt of the image data 348a-c via the network 999 from respective ones of the participating devices 300a-c. Upon receipt of the image data 348a-c, the processor circuit 150 is then caused to create and display the aggregate image data 848, therefrom. In so doing, the processor circuit 150 may be caused by execution of the control routine 140 to resolve differences in color space (e.g., RGB vs. YUV) and/or color depth (e.g., 16-bit color vs. 32-bit color) among the received captured images. The captured images making up the image data 348a-c may include metadata specifying their color space and/or color depth, which the processor circuit 150 may rely upon in resolving any such differences. Alternatively, it may be that the aforementioned signals that the processor circuit 150 was earlier caused to transmit to each of the participating devices 300a-c included an indication of a common color space and/or color depth to which each of the captured images of the image data 348a-c was to adhere, the participating devices 300a-c thus being required to perform whatever conversions of color space and/or color depth are needed to cause their captured images to meet the specified color space and/or color depth.

In various embodiments, each of the participating devices 300a-c comprises a storage 360 storing a control routine 340 and a respective one of the image data 348a-c, a processor circuit 350, the display 380, an interface 390 coupling each of the participating devices 300a-c to the network 999, the clock 330, and possibly also controls 320. In executing a sequence of instructions of at least the control routine 340, the processor circuit 350 of each of the participating devices 300a-c is caused to operate the interface 390 to receive the aforementioned signals transmitted by the initiating device 100 via the network 999 to select the participating devices 300a-c, effect time coordination among them to perform a multiple-device screen capture, and/or specify what computing device serves as the "collection device" to which captured images are to be transmitted.

In embodiments in which selection of computing devices to participate in a multiple-device screen capture entails seeking agreement of user(s) of one or more of the participating devices 300a-c, the processor circuit 350 of one or more of the participating devices 300a-c is caused by its execution of a sequence of instructions of the control routine 340 to operate the interface 390 to receive signal(s) from the initiating device 100 via the network 999 to seek such agreement. In response to receiving this signal, the processor circuit 350 is caused to visually present a request for a user to so agree on the display 380 and/or to present this request in some other way selected to be perceivable by that user (e.g., audibly via computer-generated speech, mechanical vibration of the verification device 700 to draw the user's attention, etc.). The processor circuit 350 is then caused to monitor the controls 320 (if present) for an indication of operation of the controls 320 that is indicative of its user responding to this request. Presuming such an indication is received, the processor circuit 350 is then caused to operate the interface 390 to signal the initiating device 100 with an indication of what that response is.

Regardless of the manner in which the participating devices 300a-c are selected to participate in a multiple-device screen capture, the processor circuit 350 is caused to operate the interface 390 to receive signal(s) from the initiating device via the network 999 to coordinate the timing of the screen captures performed by each of the participating devices 300a-c. In embodiments in which the received signal(s) indicate that timing coordination is to be performed by the initiating device 100, the processor circuit 350 is caused by the control routine 340 to operate the interface 390 to monitor for receipt of the expected trigger signal from the initiating device 100 via the network 999, and to perform a capture of an image of whatever is visually presented on the display 380 as the corresponding one of the image data 348a-c in response to receiving that trigger signal. Alternatively, in embodiments in which timing coordination is to be performed using a specific upcoming time as the trigger, the processor circuit 350 is caused to employ the time specified by the initiating device 100 as the trigger, and to perform a capture of an image of whatever is visually presented on the display 380 as the corresponding one of the image data 348a-c in response to the arrival of the specified time. Where the initiating device 100 has also specified a time server (e.g., the server 500), the processor circuit 350 is caused to signal the specified time server via the network 999 to acquire an indication of the current time, and to synchronize the clock 330 to that current time in preparation for employing the specified time as a trigger to perform a screen capture.

Regardless of the manner in which screen capture for each of the participating devices 300a-c is triggered, upon being triggered, the processor circuit 350 of each of the participating devices 300a-c performs a capture of an image of whatever is visually presented on its corresponding display 380. As will be familiar to those skilled in the art, typical computing devices maintain a frame buffer storing an image of what is currently visually presented on a display, with the frame buffer typically read in a two-dimensional raster-scan order of pixels on a recurring basis to refresh the image on a display, as is usually required in support of the majority of known display technologies. In performing a capture of the image of what is currently visually presented on the display 380, the processor circuit 350 is caused to create a copy of that image in the storage 360, that copy becoming the corresponding one of the image data 348a-c for each of the participating devices 300a-c. Creating a copy preserves that image for subsequent transmission to the initiating device 100 while what is visually presented on the display 380 changes.

Regardless of the exact manner in which the capture of images of what is currently visually presented on one or more of the displays 380 of one or more the participating devices 300a-c is effected, the processor circuit 350 of each of the participating devices 300a-c operates their respective one of the interfaces 390 to transmit their corresponding one of the data 348a-c to the initiating device 100 via the network 999. As previously discussed, each of the participating devices 300a-c receives information indicating what computing device serves in the role of a "collection device" for the captured images of this multiple-device screen capture (again, the initiating device 100 serves in this role in this depicted example). In embodiments in which the initiating device 100 has also specified a color space and/or color depth to which screen capture imagery transmitted to the initiating device 100 must adhere, the processor circuit 350 of each of the participating devices 300a-c may convert the color space and/or alter the color depth of corresponding ones of the image data 348a-c, as needed, before transmission to the initiating device 100.

It should be noted that at least a portion of what is visually presented on one or more of the displays 380 may be imagery subject to various licensing restrictions concerning the manner in which it may be viewed, copied and/or transmitted to other devices. Thus, as will be familiar to those skilled in the art, it may be a violation of such restrictions to perform a screen capture that would include such imagery (e.g., make a copy of such imagery as part of one of the image data 348a-c) and/or to transmit such imagery to another device via the network 999 (e.g., the initiating device 100). In some embodiments, the processor circuit 350 may respond to the inclusion of such imagery in what is visually presented on the display 380 at the time a screen capture is performed by referring to a restriction data 545 for information concerning what restrictions apply to such imagery, and may respond to an indication therein that such imagery cannot be copied and/or transmitted to another device by refraining to copy such imagery as part of a corresponding one of the data 348a-c and/or refraining to transmit such imagery to the initiating device 100 as part of that corresponding one of the data 348a-c. The restriction data 545 may be stored within the storage 360, thereby enabling relatively direct access to such information by the processor circuit 350, or as depicted, the restriction data 545 may be maintained by the server 500 (in embodiments in which the server 500 is present) and the processor circuit 350 may be caused to operate the interface 390 to signal the server 500 via the network 999 to retrieve such information.

In various embodiments, the server 500 (if present) comprises a processor circuit 550, an interface 590 coupling the transaction server 400 to the network 999, a clock 530, and a storage 560 storing a control routine 540 and one or both of the selection data 542 and the restriction data 545. In executing a sequence of instructions of at least the control routine 540, the processor circuit 550 is caused to operate the interface 590 to receive a signal either from the initiating device 100 requesting at least a portion of the selection data 542 be transmitted to it via the network 999, or from one or more of the participating devices 300a-c requesting at least a portion of the restriction data 545 and/or the current time as indicated by the clock 530 be transmitted to one or more of them via the network 999. The processor circuit 550 then operates the interface 590 to so transmit one or more of such data in response to receiving corresponding ones of such signals conveying such requests.

In various embodiments, each of the processor circuits 150, 350, 550 and 850 may comprise any of a wide variety of commercially available processors, including without limitation, an AMD® Athlon®, Duron® or Opteron® processor; an ARM® application, embedded or secure processor; an IBM® and/or Motorola® DragonBall® or PowerPC® processor; an IBM and/or Sony® Cell processor; or an Intel® Celeron®, Core (2) Duo®, Core (2) Quad®, Core i3®, Core i5®, Core i7®, Atom®, Itanium®, Pentium®, Xeon® or XScale® processor. Further, one or more of these processor circuits may comprise a multi-core processor (whether the multiple cores coexist on the same or separate dies), and/or a multi-processor architecture of some other variety by which multiple physically separate processors are in some way linked.

In various embodiments, each of the storages 160, 360, 560 and 860 may be based on any of a wide variety of information storage technologies, possibly including volatile technologies requiring the uninterrupted provision of electric power, and possibly including technologies entailing the use of machine-readable storage media that may or may not be removable. Thus, each of these storages may comprise any of a wide variety of types (or combination of types) of storage device, including without limitation, read-only memory (ROM), random-access memory (RAM), dynamic RAM (DRAM), Double-Data-Rate DRAM (DDR-DRAM), synchronous DRAM (SDRAM), static RAM (SRAM), programmable ROM (PROM), erasable programmable ROM (EPROM), electrically erasable programmable ROM (EEPROM), flash memory, polymer memory (e.g., ferroelectric polymer memory), ovonic memory, phase change or ferroelectric memory, silicon-oxide-nitride-oxide-silicon (SONOS) memory, magnetic or optical cards, one or more individual ferromagnetic disk drives, or a plurality of storage devices organized into one or more arrays (e.g., multiple ferromagnetic disk drives organized into a Redundant Array of Independent Disks array, or RAID array). It should be noted that although each of these storages is depicted as a single block, one or more of these may comprise multiple storage devices that may he based on differing storage technologies. Thus, for example, one or more of each of these depicted storages may represent a combination of an optical drive or flash memory card reader by which programs and/or data may be stored and conveyed on some form of machine-readable storage media, a ferromagnetic disk drive to store programs and/or data locally for a relatively extended period, and one or more volatile solid state memory devices enabling relatively quick access to programs and/or data (e.g., SRAM or DRAM). It should also be noted that each of these storages may be made up of multiple storage components based on identical storage technology, but which may be maintained separately as a result of specialization in use (e.g., some DRAM devices employed as a main storage while other DRAM devices employed as a distinct frame buffer of a graphics controller).

In various embodiments, each of the interfaces 190, 390, 590 and 890 employ any of a wide variety of signaling technologies enabling each of computing devices 100, 300a-c, 500 and 800 to be coupled through the network 999 as has been described. Each of these interfaces comprises circuitry providing at least some of the requisite functionality to enable such coupling. However, each of these interfaces may also be at least partially implemented with sequences of instructions executed by corresponding ones of the processor circuits 150, 350, 550 and 850 (e.g., to implement a protocol stack or other features). Where one or more portions of the network 999 employs electrically and/or optically conductive cabling, corresponding ones of the interfaces 190, 390 and 590 may employ signaling and/or protocols conforming to any of a variety of industry standards, including without limitation, RS-232C, RS-422, USB, Ethernet (IEEE-802.3) or IEEE-1394. Alternatively or additionally, where one or more portions of the network 999 entails the use of wireless signal transmission, corresponding ones of the interfaces 190, 390, 590 and 890 may employ signaling and/or protocols conforming to any of a variety of industry standards, including without limitation, IEEE 802.11a, 802.11b, 802.11g, 802.16, 802.20 (commonly referred to as "Mobile Broadband Wireless Access"); Bluetooth; ZigBee; or a cellular radiotelephone service such as GSM with General Packet Radio Service (GSM/GPRS), CDMA/1xRTT, Enhanced Data Rates for Global Evolution (EDGE), Evolution Data Only/Optimized (EV-DO), Evolution For Data and Voice (EV-DV), High Speed Downlink Packet Access (HSDPA), High Speed Uplink Packet Access (HSUPA), 4G LTE, etc. It should be noted that although each of the interfaces 190, 390, 590 and 890 are depicted as a single block, one or more of these may comprise multiple interfaces that may be based on differing signaling technologies. This may be the case especially where one or more of these interfaces couples corresponding ones of the computing devices 100, 300a-c, 500 and 800 to more than one network, each employing differing communications technologies.

In various embodiments, each of the controls 120, 320 and 820 may comprise any of a variety of types of manually-operable controls, including without limitation, lever, rocker, pushbutton or other types of switches; rotary, sliding or other types of variable controls; touch sensors, proximity sensors, heat sensors or bioelectric sensors, etc. Each of the controls 120, 320 and 820 may comprise manually-operable controls disposed upon a casing of corresponding ones of the computing devices 100, 300a-c and 800, and/or may comprise manually-operable controls disposed on a separate casing of a physically separate component of corresponding ones of these computing devices (e.g., a remote control coupled to other components via infrared signaling). Alternatively or additionally, the controls 120, 320 and 820 may comprise any of a variety of non-tactile user input components, including without limitation, a microphone by which sounds may be detected to enable recognition of a verbal command; a camera through which a face or facial expression may be recognized; an accelerometer by which direction, speed, force, acceleration and/or other characteristics of movement may be detected to enable recognition of a gesture; etc.

In various embodiments, each of the displays 180, 380 and 880 may be based on any of a variety of display technologies, including without limitation, a liquid crystal display (LCD), including touch-sensitive, color, and thin-film transistor (TFT) LCD; a plasma display; a light emitting diode (LED) display; an organic light emitting diode (OLED) display; a cathode ray tube (CRT) display, etc. Each of these displays may be disposed on a casing of corresponding ones of the computing devices 100, 300a-c and 800, or may be disposed on a separate casing of a physically separate component of corresponding ones of these computing devices (e.g., a flat panel monitor coupled to other components via cabling).

In various embodiments, the clocks 330 and 530 may be based on any of a variety of timekeeping technologies, including analog and/or digital electronics, including an oscillator. However, where the server 500 is present and serves in the role of a time server, the clock 530 may be an atomic clock or other highly precise clock maintained by an entity such as a government agency.

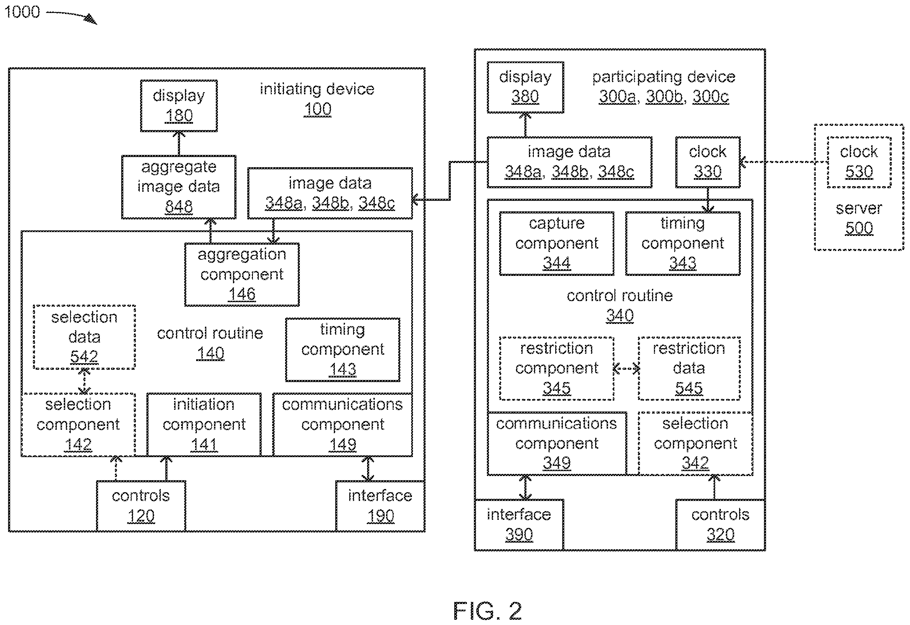

**Figure 2** illustrates a block diagram of a portion of the block diagram of Figure 1 in greater detail. More specifically, aspects of the operating environments of the initiating device 100 and the participating devices 300a-c in which their respective processor circuits 150 and 350 (shown in Figure 1) are caused by execution of their respective control routines 140 and 340 to perform the aforedescribed functions are depicted. As will be recognized by those skilled in the art, each of the control routines 140 and 340, including the components of which each is composed, are selected to be operative on whatever type of processor or processors that are selected to implement each of the processor circuits 150 and 350.

In various embodiments, one or more of the control routines 140 and 340 may comprise a combination of an operating system, device drivers and/or application-level routines (e.g., so-called "software suites" provided on disc media, "applets" obtained from a remote server, etc.). Where an operating system is included, the operating system may be any of a variety of available operating systems appropriate for whatever corresponding ones of the processor circuits 150 and 350, including without limitation, Windows™, OS X™, Linux®, or Android OS™. Where one or more device drivers are included, those device drivers may provide support for any of a variety of other components, whether hardware or software components, that comprise one or more of the computing devices 100 and 300a-c.

Each of the control routines 140 and 340 comprises a communications component 149 and 349, respectively, executable by corresponding ones of the processing circuits 150 and 350 to operate corresponding ones of the interfaces 190 and 390 to transmit and receive signals via the network 999 as has been described. As will be recognized by those skilled in the art, each of the communications components 149 and 349 are selected to be operable with whatever type of interface technology is selected to implement each of the interfaces 190 and 390.

The control routine 140 comprises an initiation component 141 executable by the processing circuit 150 to monitor the controls 120 and/or some other source of input to the initiating device 100 for a signal indicating input received (perhaps by a user of the initiating device 100) that conveys a command to the initiating device 100 to initiate a multiple-device screen capture. Also, at least the control routine 340, and perhaps also the control routine 140, comprise a selection component 342 and 142, respectively, executable by corresponding ones of the processing circuits 350 and 150 to perform aspects of selecting computing devices to participate in a multiple-device screen capture by obtaining agreement from user(s) of one or more of the participating devices 300a-c and/or by referring to the selection data 542, as has been described. One or more of the initiation component 141, the selection component 142 and the selection component 342 (if present) may provide at least some aspects of a user interface by which users of one or more of the computing devices 100 and 300a-c may interact with them. This may include monitoring corresponding ones of the controls 120 and 320 (if present) to receive indications of operation associated with user input, and to cause various forms of information to be visually presented on corresponding ones of the displays 180 and 380 (e.g., visual presentations of request for agreement to participate in a multiple-device screen capture, as has been described). As will be recognized by those skilled in the art, where one or more of these components do provide aspects of a user interface, each is selected to be operable with whatever type of interface technology is selected to monitor the controls 120 and/or 320, and with whatever type of interface technology is selected to drive the presentation of information on to the displays 180 and/or 380. In various embodiments, the user interfaces of one or more of the computing devices 100 and 300a-c may comprise a web browser, email client, terminal emulator or other executable sequence of instructions enabling a user of one or more of the computing devices 100 and 300a-c to remotely interact with other computing devices via corresponding ones of the communications components 149 and 349, and the interfaces 190 and 390.

The control routines 140 and 340 comprise a timing component 143 and 343, respectively, executable by the processing circuits 150 and 350a-c to coordinate the screen captures of each of the participating devices 300a-c to cause those screen captures to be triggered substantially simultaneously, as has been described, whether through use of a trigger signal transmitted by the initiating device 100 or through use of a common specified upcoming time. As has been described, where an upcoming time has been specified as a common trigger, and where a time server (e.g., the server 500) has been specified by the initiating device 100, the processor circuit 350 of each the participating devices 300a-c may be caused by corresponding ones of the timing component 343 to operate the interface 390 to signal the specified time server via the network 999 to provide the current time indicated by its clock (e.g., the clock 530 of the server 500) to enable the clock 330 of each of the participating devices 300a-c to be synchronized to a common clock (e.g., the time server's clock).

The control routine 340 comprises a capture component 344 executable by the processing circuits 350a-c to perform the capturing of images of what is visually presented by each of the participating devices 300a-c, respectively, on each of their displays 380, as has been described. Also, the control routine 340 may comprise a restriction component 345 executable by the processing circuits 350a-c to prevent copying and/or transmission of imagery subject to licensing restrictions based on restrictions detailed within the restriction data 545, as has been described.

The control routine 140 comprises an aggregation component 146 executable by the processing circuit 150 to perform the aggregation of the images of the image data 348a-c to create the aggregated image data 848 for visual presentation on the display 180, as has been described.

In one example embodiment, the participating devices 300a-c are computing devices that are all associated with a single user employing all three of them in a common task, such as accessing a single email account associated with that user or performing an online financial transaction involving a single account associated with that user. During this user's attempt to use the participating devices 300a-c in performing this task, some form of malfunction or other disruption has occurred preventing this user from completing this task, and this user contacts a representative of an institution associated with the account and/or other aspect of this task for assistance (e.g., a member of an information technology of a corporation, a customer support representative, etc.).

The initiating device 100 is a computing device associated with that institution and regularly used by the representative in providing assistance to persons such as the user of the participating devices 300a-c. In an effort to understand the details of the problem encountered by this user, the representative operates the controls 120 of the initiating device 100 to initiate a multiple-device screen capture entailing capturing what is currently visually presented by the displays 380 of all three of the participating devices 300a-c. The initiation component 141 causes the processor circuit 150 to monitor for and detect this operation of the controls 120, resulting in execution of the selection component 142. It may be that the selection component 142 simply refers to the selection data 542 to identify all three of the participating devices 300a-c as being appropriate for participation in the multiple-device screen capture as a result of being associated with this user, or refers to the selection data 542 to identify all three of the participating devices 300a-c as currently in use by this user to access the account (the selection data 542 having been updated to reflect what computing devices are currently employed in accessing that account by a server monitoring such an activity). Alternatively, execution of the selection component 142 may cause the processor circuit 150 to signal the participating devices 300a-c to present this user with requests to agree to participation by each of the participating devices 300a-c in the multiple-device screen capture. In embodiments where such agreement of this user is sought, the selection component 342 is triggered by receipt of signals to present the request for such agreement to visually and/or in some other way present that request to this user, and to await the user's response, possibly by monitoring the controls 320 (if present).

Following selection, the processor circuit 150 is then caused by the timing component 143 to signal the participating devices 300a-c with timing information to either await a triggering signal from the initiating device 100 or to employ the arrival of a specified time as the trigger. As has been discussed, the timing information may comprise information identifying a timing server (e.g., the server 500) for each of the participating devices 300a-c to contact to synchronize their respective clocks 330. In response, the processor circuits 350 of each of the participating devices 300a-c are caused by their respective ones of the timing component 343 to await the trigger, whether that trigger is to be a signal from the initiating device 100 or the arrival of a specified time. As has been discussed, the timing component 343 may cause the processor circuits 350 to also signal a time server specified by the initiating device 100 to synchronize the clocks 330 of all three of the participating devices 300a-c. The capture component 344 of each of the participating devices 300a-c is then executed in response to the trigger, causing the processor circuits 350 of each of the participating devices 300a-c to capture what is currently visually presented on their respective ones of the displays 380 for subsequent transmission to the initiating device 100. However, what is visually presented on one or more of the displays 380 may include imagery subject to licensing restrictions, and one or more of the processor circuits 350 may be caused by a corresponding one of the restriction component 345 to refer to the restriction data 545 to determine the nature or degree of those restrictions, and to possibly refrain from performing the capturing and/or transmitting of whatever portion of what is visually presented that comprises such restricted imagery.

As has been discussed, information identifying a computing device to serve in the role of "collection device" may be specified by the initiating device 100 to each of the participating devices 300a-c in signal transmissions to each of them. Such signal transmissions may be part of signals conveying commands to present requests for agreement to participate and/or signals conveying timing information.

Following triggering of the multiple-device screen capture (however it occurs), and with the initiating device 100 serving in the role of a collection device, the processor circuit 150 is caused by the aggregation component 146 to await receipt of the image data 348a-c from corresponding ones of the participating devices 300a-c through the network 999, and is further caused to create the aggregated image data 848, therefrom. With the aggregate image data 848 visually presented on the display 180, the representative may be provided with various visual clues as to the nature of whatever problem this user has encountered.

As those skilled in the art will readily recognize, where one computing device transmits a signal to other computing devices via a network as a trigger for the other computing devices to perform an action, it is seldom possible to rely on that signal reaching the other computing devices precisely at the same time, and it is seldom possible to rely on each of those other computing devices to respond to receipt of that trigger to perform that action with precisely the same reaction time. Protocols, time slice algorithms, and other common features of both wired and wireless networks often render the simultaneous delivery of a common signal impossible. Differences in software routines executed and/or types and quantities of data processed with those software routines often cause even physically identical computing devices to respond to the same trigger with different reaction times. Thus, as used herein, terms such as "substantially simultaneously" or "substantially the same time" are envisioned as acknowledging that some events may not occur precisely simultaneously or at precisely the same time. However, given the present day state of the art in commonly used networks and commonly used computing devices, it is envisioned that differences in timing are minimal to the extent that events referred to as occurring "substantially simultaneously" or at "substantially the same time" are likely to be events that are triggered to begin within a second or less of each other, or possibly triggered to begin within less than 5 seconds of each other in the very worst case.

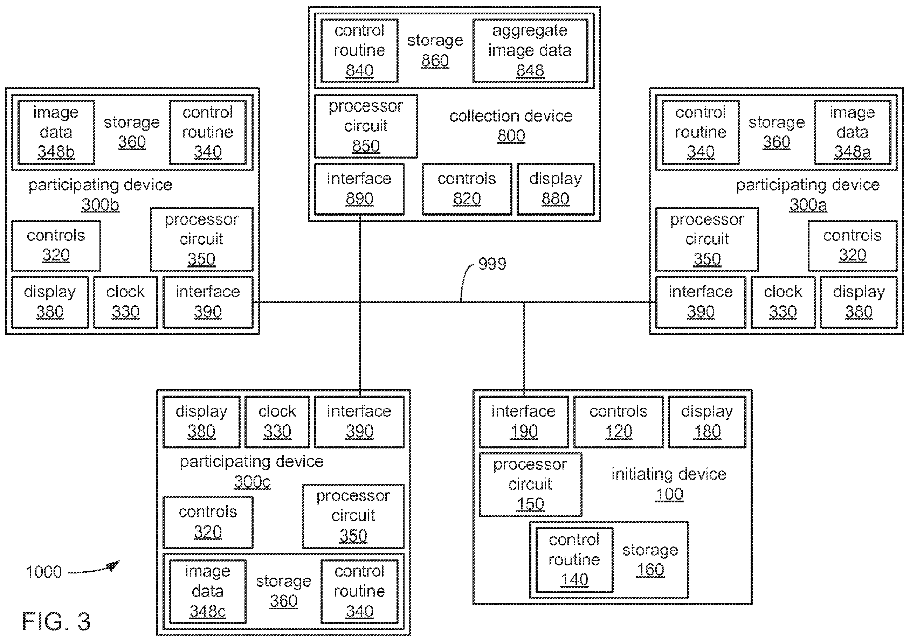

**Figure 3** illustrates a block diagram of a variation of the screen capture system 1000 of Figure 1. This variation depicted in Figure 3 is similar to what is depicted in Figure 1 in many ways, and thus, like reference numerals are used to refer to like elements throughout. However, unlike the screen capture system 1000 as depicted in Figure 1, the variant of the screen capture system 1000 depicted in Figure 3 additionally comprises a collection device 800, which is also coupled to the network 999 to exchange signals with one or more of the initiating device 100 and the participating devices 300a-c. Although not specifically depicted in Figure 3 for sake of visual clarity, this variant of the capture system 1000 may also comprise the server 500.

In a similar manner to what was discussed in reference to Figure 1, the initiating device 100 still exchanges various signals concerning selection and timing with the participating devices 300a-c via the network 999 to initiate a multiple-device screen capture in which images of what is visually presented on each of the displays 380 of each of the participating devices 300a-c is captured. However, in this variant, the initiating device 100 signals each of the participating devices 300a-c to transmit their captured images via the network 999 to a computing device serving in the role of a "collection device" that is separate and distinct from the initiating device 100. Thus, in this variant, following their coordinated screen captures, the image data 348a-c is transmitted by corresponding ones of the participating devices 300a-c via the network 999 to a collection device 800 within which the aggregation of the captured images into the aggregate image data 848 occurs, instead of within the initiating device 100. Further, the visual presentation of the aggregate image data 848 occurs on a display 880 of the collection device 800, instead of on the display 180 of the initiating device 100.

In various embodiments, the collection device 800 comprises a storage 860 storing a control routine 840 and the aggregate image data 848, a processor circuit 850, the display 880, an interface 890 coupling the collection device 800 to the network 999, and possibly also controls 820. In executing a sequence of instructions of at least the control routine 840, the processor circuit 850 is caused to monitor the interface 890 for receipt of the image data 348a-c from corresponding ones of the participating devices 300a-c. In response to receiving the image data 348a-c, the processor circuit 850 is then caused to aggregate the captured imagery of the image data 348a-c into the aggregate image data 848, and to visually present it, as has been described.

In one example implementation of the variant of the screen capture system 1000 of Figure 3, each of the participating devices 300a-c may be computing devices associated with a different user collaborating with each other on a common task such researching different, but related, aspects of a topic they are discussing among themselves. The collection device 800 may be a network-connected television or other computing device optimized in its design to visually present information, and the initiating device 100 may be a portable tablet-type computer system used in the setting in which these computing devices exist to control use of the collection device 800 as well as possibly still other devices (not shown). To facilitate sharing their research results with each other, they wish aggregate visual representations of the various results of their individual research efforts and visually present them together on the display 880 of the collection device.

One of these people operates the controls 120 of the initiating device 100 to initiate a multiple-device screen capture in which screen captures of images of what is visually presented on the displays 380 of all three of the participating devices 300a-c will be made. Selection and timing coordination for this multiple-device screen capture proceeds in much the same way as was previously described in the earlier institutional representative support example presented in regard to the screen capture system 1000 as depicted in Figure 1. However, instead of the participating devices 300a-c being signaled by the initiating device 100 to transmit their captured images via the network 999 back to the initiating device 100, with the initiating device 100 serving in the role of a collection device, the participating devices 300a-c are signaled by the initiating device 100 to transmit their captured images to the collection device 800. Following their coordinated screen captures, all three of the participating devices 300a-c transmit corresponding ones of the image data 348a-c to the collection device 800, where the processor circuit 850 is caused by the control routine 840 to aggregate the captured images of the image data 384a-c to create the aggregate image data 848 that is visually presented on the display 880 where the users of the participating devices 300a-c can look at it, together.

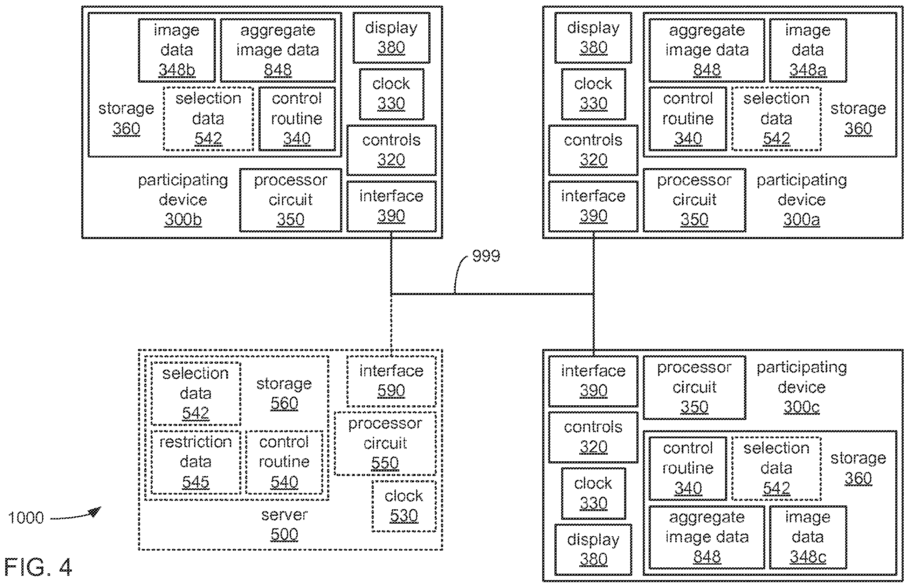

**Figure 4** illustrates a block diagram of another variation of the transaction system 1000 of Figure 1. This variation depicted in Figure 4 is also similar to what is depicted in Figure 1 in many ways, and thus again, like reference numerals are used to refer to like elements throughout. All three of the participating devices 300a-c still perform captures of images of what each visually presents on corresponding ones of their displays 380 with the triggering of those screen captures being coordinated in time. However, the initiating device and collection device roles originally performed by the initiating device 100 in the screen capture system 1000 as depicted in Figure 1 are each performed by one or more of the participating devices 300a-c in this variant of the screen capture system 1000 depicted in Figure 4.

Thus, unlike the screen capture system 1000 as depicted in Figure 1, in the variant of the screen capture system of 1000 depicted in Figure 4, a user of one of the participating devices 300a-c initiates a multiple-device screen capture possibly through operation of its controls 320. In response, the processor circuit 350 of that one of the participating devices 300a-c is caused to perform selection of computing devices to participate, perhaps by operating its interface 390 to signal the others of the participating devices 300a-c to present requests for their users to indicate agreement to participate in this multiple-device screen capture. Which of the others of the participating devices 300a-c are to be signaled to present such a request may be provided through user operation of the controls 320 of one of the participating devices 300a-c, or may be retrieved from the selection data 542 (possibly stored in the storage 360 of one or more of the participating devices 300a-c, or possibly stored in the server 500, if present). Which of the participating devices 300a-c are to participate are determined, at least partially, based on indications received via the network 999 of the user responses to the presented requests for agreement (for sake of discussion, it is presumed that all three of the participating devices 300a-c are to participate).

With the selection of computing devices to participate in this multiple-device screen capture known to include all three of the participating devices 300a-c, the processor circuit 350 of the one of these devices serving in the role of an initiating device is caused to operate its corresponding one of the interfaces 390 to signal the others of the participating devices 300a-c with information identifying all three of the participating devices 300a-c as serving in the role of collection devices. Then, the processor circuit 350 of the one of the participating devices 300a-c serving as the initiating device is caused to operate the interface 390 to signal the others of the participating devices 300a-c to coordinate the timing of the screen captures that each is to perform, possibly by specifying a specific upcoming time at which all three of the participating devices 300a-c will be triggered to perform their respective screen captures. In so doing, the server 500 (if present) may be identified in those signals as a time server that each of the participating devices 300a-c should signal via the network 999 to synchronize corresponding ones of their clocks 330 with.

Following the time-coordinated triggering of screen captures by all three of the participating devices 300a-c, each of the processor circuits 350 operate their respective interfaces 390 to transmit their respective ones of the image data 348a-c to the others of the participating devices 300a-c, since all three of these devices have been identified as serving as collection devices. Correspondingly, each of the processor circuits 350 monitor their respective interfaces 390 to await receipt of the captured imagery from the other two of the participating devices 300a-c via the network 999. In other words, the participating device 300a transmits its image data 348a to the participating devices 300b and 300c, the participating device 300b transmits its image data 348b to the participating devices 300a and 300c, and the participating device 300c transmits its image data 348c to the participating devices 300a and 300b. Following this exchange of captured imagery, each of the processor circuits 350 are caused to independently create separate versions of the aggregated image data 848 from the image data 348a-c for subsequent visual presentation on their respective ones of the displays 380.

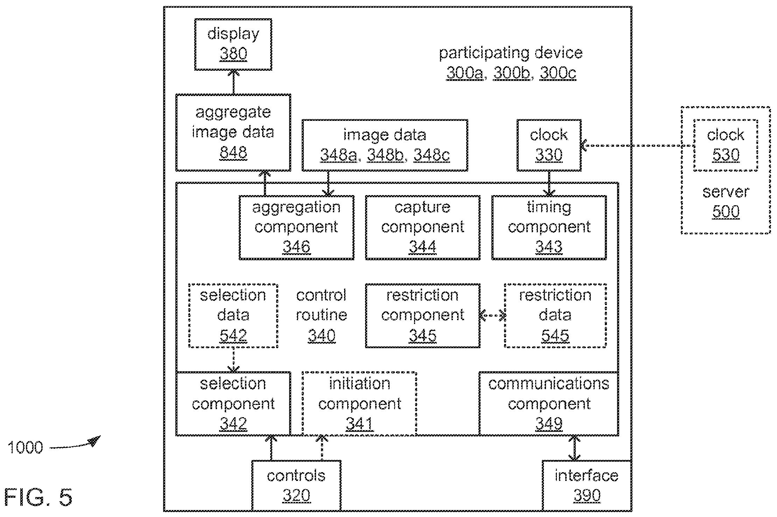

**Figure 5** illustrates a block diagram of a portion of the block diagram of Figure 4 in greater detail. More specifically, aspects of the operating environments of the participating devices 300a-c in which their respective processor circuits 350 (shown in Figure 4) are caused by execution of their respective ones of the control routine 340 to perform the aforedescribed functions are depicted. As will be recognized by those skilled in the art, in each of the participating devices 300a-c, the control routine 340, including the components of which it is composed, are selected to be operative on whatever type of processor or processors are selected to implement each of their corresponding ones of the processor circuit 350.

In the variation of the capture system 1000 depicted in Figure 4, the operating environments of the participating devices 300a-c are similar to those of the capture system 1000 as depicted in Figures 1 and 2 in many ways, and thus, like reference numerals are used to refer to like components throughout. However, in the control routine 340 of the participating devices 300a-c in the variant of the capture system 1000 of Figure 4 additionally comprises an aggregation component 346 and possibly also an initiation component 341. These additional components are provided to enable each of the participating devices 300a-c in this variant of the capture system 1000 to serve in one or both of the initiating device and collection device roles, in addition to serving in their participating device roles. Thus, the aggregation component 344 enables one or more of the participating devices 300a-c to aggregate the image data 348a-c into the aggregate image data 848 as has been described, and the initiation component 341 enables at least one of the participating devices 300a-c to respond to an input to initiate a multiple-device screen capture as has been described.

In one example embodiment, the participating devices 300a-c are computing devices that are each associated with a different user, and they are being employed by their respective users together to perform a collaborative task such as playing a multiple-person computer-based game. At some point, these users wish to memorialize the current state of the game, and to do this, the user of the participating device 300a operates its controls 320 to initiate a multiple-device screen capture entailing capturing what is currently visually presented by the displays 380 of all three of these devices. The initiation component 341 of the participating device 300a responds by causing the processor circuit 350 to execute the selection component 342, which in turn, causes the processor circuit 350 of the participating device 300a to signal the participating devices 300b and 300c to present their users with requests to agree to participation in the multiple-device screen capture. The processor circuits 350 of each of the participating devices 300b and 300c are caused by their respective ones of the selection component 342 to present the request for such agreement to their respective users in response to receiving the signal to do so, followed by monitoring their respective ones of the controls 320 for responses from their users.

Following selection, the processor circuit 350 of the participating device 300a is caused to signal the participating devices 300b and 300c indicate that all three of the participating devices 300a-c serve in the role of collection device in the multiple-device screen capture. The processor circuit 350 of the participating device 300a is then caused by the timing component 343 to signal the participating devices 300b and 300c to either await a triggering signal from the participating device 300a via the network 999 or to employ the arrival of a specified time as the trigger (while possibly also identifying a time server with which to synchronize their respective ones of the clock 330). The processor circuits 350 of each of the participating devices 300b and 300c are caused by their respective ones of the timing component 343 to await the trigger, whether that trigger is to be a signal from the participating device 300a or the arrival of a specified time. The capture components 344 of all three of the participating devices 300a-c are then executed in response to the trigger, causing the processor circuits 350 of each of the participating devices 300a-c to capture what is currently visually presented on their respective ones of the display 380 for subsequent transmission. However, what is visually presented on one or more of the displays 380 may include imagery subject to licensing restrictions, and one or more of the processor circuits 350 may be caused by their respective ones of the restriction component 345 to refer to the restriction data 545 to determine the nature or degree of those restrictions, and to refrain from performing the capturing and/or transmitting of whatever portion of what visually presented that comprises such restricted imagery.

Following triggering of the multiple-device screen capture (however it occurs), the processor circuits 350 of each of the participating devices 300a-c are caused by their respective ones of the aggregation component 346 to await receipt of two of the image data 348a-c from the other two of the participating devices 300a-c through the network 999, and are further caused to each independently create their own corresponding versions of the aggregated image data 848, therefrom. With the creation and subsequent visual presentation of their individual versions of the aggregate image data 848 on corresponding ones of the displays 380, each of the users of one of the participating devices 300a-c now has captured imagery memorializing the current state of their game.

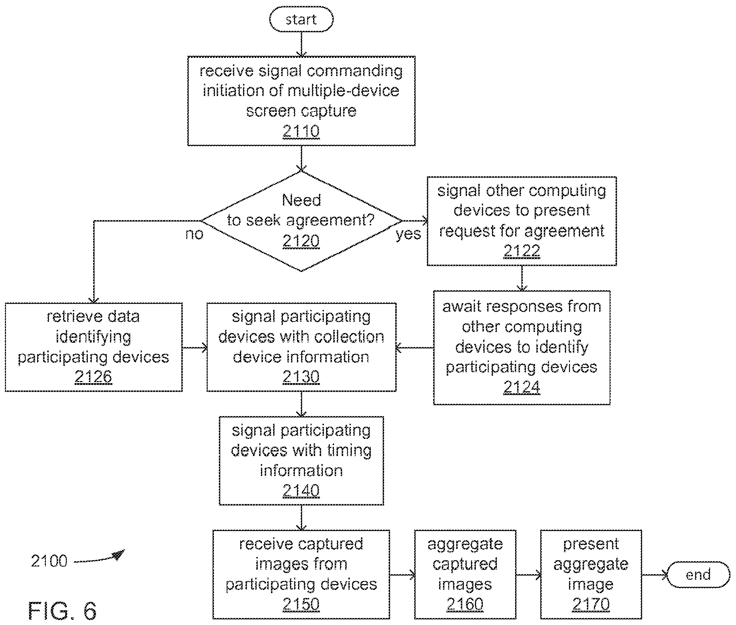

**Figure 6** illustrates one embodiment of a logic flow 2100. The logic flow 2100 may be representative of some or all of the operations executed by one or more embodiments described herein. More specifically, the logic flow 2100 may illustrate operations performed by the processing circuit 150 of the initiation device 100 in executing at least the control routine 140, or by the processing circuit 350 of one of the participating devices 300a-c serving in the role of an initiating device.

At 2110, an initiating device (e.g., the initiating device 100 or one of the participating devices 300a-c acting the role of an initiating device) receives a signal commanding the initiating device to initiate a multiple-device screen capture. As has been discussed, this received signal conveying such a command may emanate from controls of the initiating device that have been operated by a user of the initiating device to provide that command to the initiating device.

If, at 2120, the selection of computing devices to serve in the role of participating devices (e.g., the participating devices 300a-c) entails obtaining agreement from users of those computing devices to those computing devices becoming participating devices in this multiple-device screen capture in which an image of whatever is visually presented on their displays is captured, then at 2122, the initiating device signals those other computing devices to present their users with a request for them to so agree. Then, at 2124, the initiating device awaits responses from those other computing devices indicating what response was received to the request for agreement, with the selection of participating devices from among those computing devices based (at least in part) on those received responses. As previously discussed, the choice of what computing devices arc to be signaled to present such a request may be provided as an input to the initiating device by its user (possibly via the same controls that may have originally been used to provide the initiation command to the initiation device), or may be retrieved from a selection data providing information concerning what computing devices are permitted to participate in a multiple-device screen capture.

However, if at 2120, the selection of computing devices to serve in the role of participating devices does not entail obtaining such agreement, then at 2126, the initiating device retrieves information from a selection data indicating what computing devices are permitted to participate in a multiple-device screen capture. The selection of participating devices is then based (at least in part) on what computing devices are identified in the selection data as permitted to so participate.

At 2130, regardless of the manner in which the participating devices are selected, the participating devices are signaled with information indicating what computing device(s) is/are to serve in the role of a collection device. As has been discussed, the initiation device, a separate and distinct collection device (e.g., the collection device 800), and/or one or more of the participating devices may serve in the role of a collection device.

At 2140, the initiating device signals the participating devices with timing information. As previously discussed, such signaling may indicate to the participating devices to prepare to receive a further signal from the initiating device that serves as a trigger for each of the participating devices to perform their respective screen captures. Or, as also previously discussed, such signaling may indicate a specific upcoming time as the trigger for screen captures, and may further identify a time server (e.g., the server 500) for each of the participating devices to communicate with to synchronize their clocks.

At 2150, the initiating device receives captured images of what was visually presented on the displays of the participating devices. At 2160, the initiating device aggregates the captured images into a single aggregate image. At 2170, the initiating device visually presents the aggregate image. Again, as previously discussed, depending on what computing devices were earlier indicated to the participating devices as serving in the role of collection device, the captured images may have been transmitted to other computing devices in addition to or in lieu of the initiating device, and those other computing devices would aggregate and/or visually present those captured images (in aggregated form).

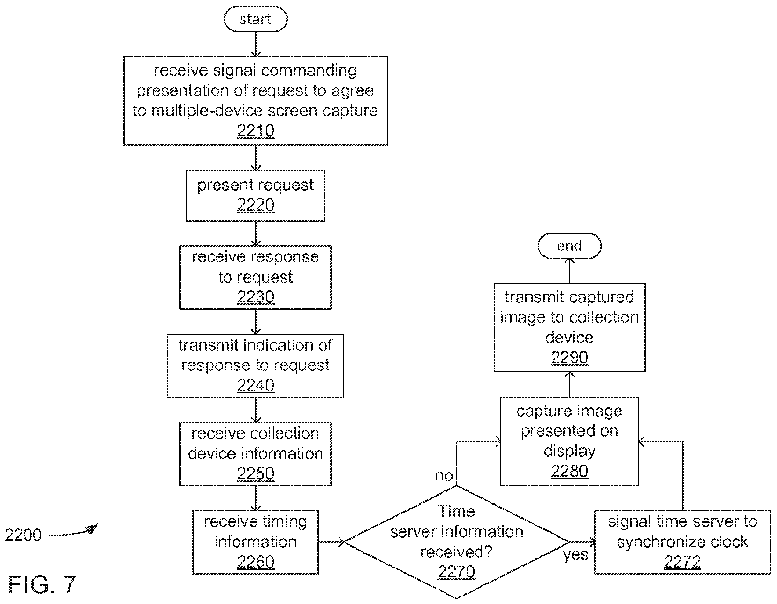

**Figure 7** illustrates one embodiment of a logic flow 2200. The logic flow 2200 may be representative of some or all of the operations executed by one or more embodiments described herein. More specifically, the logic flow 2200 may illustrate operations performed by the processing circuit 350 of one or more of the participating devices 300a-c in executing at least the control routine 340.

At 2210, a participating device (e.g., one of the participating devices 300a-c) receives a signal commanding the participating device to present its user with a request to agree to participation by the participating device in a multiple-device screen capture in which an image is to be captured of what the participating device presents on its display. As has been discussed, the signal conveying the command to so present such a request is transmitted to the participating device by another computing device serving in the role of an initiating device (e.g., the initiating device 100 or another one of the participating devices 300a-c).

At 2220, the participating device presents such a request. As has been discussed, the presentation of such a request may be visually on a display, audibly via a speaker, or in some other way selected to be perceivable in some way by its user.

At 2230, the participating device receives a response to the presented request. As has been discussed, this response may be conveyed to the participating device via signals it receives as a result of operation of its controls by its user. At 2240, the participating device transmits this received response to the initiating device.

At 2250, the participating device receives a signal from the initiating device conveying collection device information identifying one or more other computing devices as serving in the role of a collection device. As previously discussed, computing devices serving as collection devices may include the initiating device, a separate and distinct collection device (e.g., the collection device 800), and/or another participating device.

At 2260, the participating device receives a signal from the initiating device conveying timing information. As previously discussed, such signaling may indicate a specific upcoming time as the trigger for screen the participating device to capture an image of what it visually presents on its display, and may further identify a time server (e.g., the server 500) for the participating device to communicate with to synchronize its clock. If, at 2270, the participating device did receive timing information identifying a time server, then at 2272, the participating device signals the time server with a request for the current time to enable the participating device to synchronize its clock with a clock of the time server.

At 2280, the participating device is triggered to capture an image of whatever it is currently visually presenting on its display. At 2290, the participating device transmits the captured image to the one or more collection devices earlier identified to the participating device.

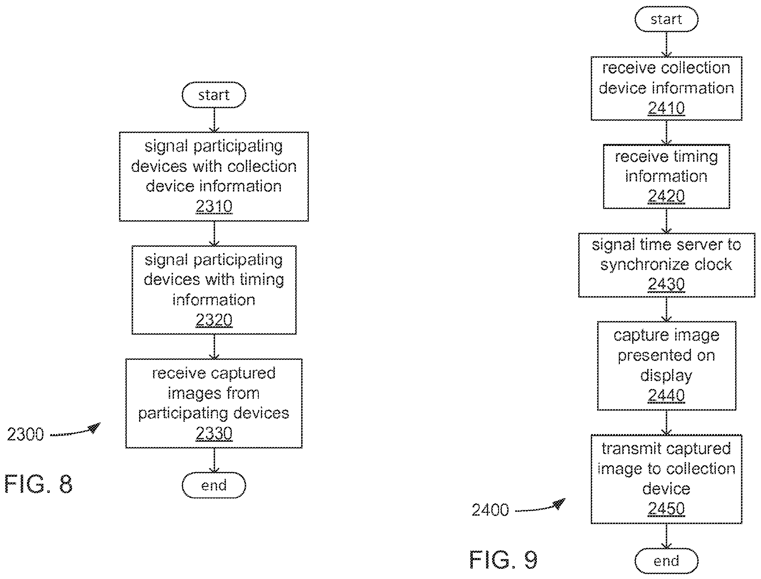

**Figure 8** illustrates one embodiment of a logic flow 2300. The logic flow 2300 may be representative of some or all of the operations executed by one or more embodiments described herein. More specifically, the logic flow 2300 may illustrate operations performed by the processing circuit 150 of the initiation device 100 in executing at least the control routine 140, or by the processing circuit 350 of one of the participating devices 300a-c serving in the role of an initiating device.

At 2310, an initiating device (e.g., the initiating device 100 or one of the participating devices 300a-c acting the role of an initiating device) signals the participating devices (e.g., the participating devices 300a-c) with information indicating what computing device(s) is/are to serve in the role of a collection device. As has been discussed, the initiation device, a separate and distinct collection device (e.g., the collection device 800), and/or one or more of the participating devices may serve in the role of a collection device.

At 2320, the initiating device signals the participating devices with timing information. As previously discussed, such signaling may indicate to the participating devices to prepare to receive a further signal from the initiating device that serves as a trigger for each of the participating devices to perform their respective screen captures. Or, as also previously discussed, such signaling may indicate a specific upcoming time as the trigger for screen captures, and may further identify a time server (e.g., the server 500) for each of the participating devices to communicate with to synchronize their clocks.

At 2330, the initiating device receives captured images of what was visually presented on the displays of the participating devices. As previously discussed, depending on what computing devices were earlier indicated to the participating devices as serving in the role of collection device, the captured images may have been transmitted to other computing devices in addition to or in lieu of the initiating device.

**Figure 9** illustrates one embodiment of a logic flow 2400. The logic flow 2400 may be representative of some or all of the operations executed by one or more embodiments described herein. More specifically, the logic flow 2400 may illustrate operations performed by the processing circuit 350 of one or more of the participating devices 300a-c in executing at least the control routine 340.

At 2410, the participating device (e.g., one of the participating devices 300a-c) receives a signal conveying collection device information identifying one or more other computing devices as serving in the role of a collection device. As has been discussed, the signal conveying such collection device information is transmitted to the participating device by another computing device serving in the role of an initiating device (e.g., the initiating device 100 or another one of the participating devices 300a-c). As has also been discussed, computing devices serving as collection devices may include the initiating device, a separate and distinct collection device (e.g., the collection device 800), and/or another participating device.

At 2420, the participating device receives a signal from the initiating device conveying timing information indicating a specific upcoming time as the trigger for screen the participating device to capture an image of what it visually presents on its display, and identifying a time server (e.g., the server 500) for the participating device to communicate with to synchronize its clock. At 2430, the participating device signals the identified time server with a request for the current time to enable the participating device to synchronize its clock with a clock of the time server.

At 2440, the participating device is triggered to capture an image of whatever it is currently visually presenting on its display. At 2450, the participating device transmits the captured image to the one or more collection devices earlier identified to the participating

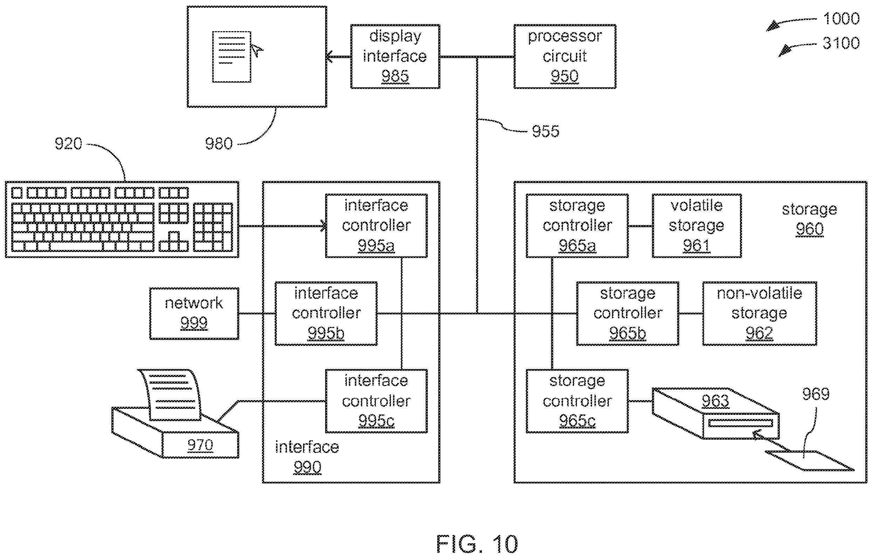

**Figure 10** illustrates an embodiment of an exemplary processing architecture 3100 suitable for implementing various embodiments as previously described. More specifically, the processing architecture 3100 (or variants thereof) may be implemented as part of one or more of the computing devices 100, 300a-c, 500 and 800. It should be noted that components of the processing architecture 3100 are given reference numbers in which the last two digits correspond to the last two digits of reference numbers of components earlier depicted and described as part of each of the computing devices 100, 300a-c, 500 and 800. This is done as an aid to correlating such components of whichever ones of the computing devices 100, 300a-c, 500 or 800 may employ this exemplary processing architecture in various embodiments.

The processing architecture 3100 includes various elements commonly employed in digital processing, including without limitation, one or more processors, multi-core processors, coprocessors, memory units, chipsets, controllers, peripherals, interfaces, oscillators, timing devices, video cards, audio cards, multimedia input/output (I/O) components, power supplies, etc. As used in this application, the terms "system" and "component" are intended to refer to an entity of a computing device in which digital processing is carried out, that entity being hardware, a combination of hardware and software, software, or software in execution, examples of which are provided by this depicted exemplary processing architecture. For example, a component can be, but is not limited to being, a process running on a processor circuit, the processor circuit itself, a storage device (e.g., a hard disk drive, multiple storage drives in an array, etc.) that may employ an optical and/or magnetic storage medium, an software object, an executable sequence of instructions, a thread of execution, a program, and/or an entire computing device (e.g., an entire computer). By way of illustration, both an application running on a server and the server can be a component. One or more components can reside within a process and/or thread of execution, and a component can be localized on one computing device and/or distributed between two or more computing devices. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to one or more signal lines. Each message may be a signal or a plurality of signals transmitted either serially or substantially in parallel.

As depicted, in implementing the processing architecture 3100, a computing device comprises at least a processor circuit 950, a storage 960, an interface 990 to other devices, and coupling 955. As will be explained, depending on various aspects of a computing device implementing the processing architecture 3100, including its intended use and/or conditions of use, such a computing device may further comprise additional components, such as without limitation, a display interface 985.

Coupling 955 is comprised of one or more buses, point-to-point interconnects, transceivers, buffers, crosspoint switches, and/or other conductors and/or logic that communicatively couples at least the processor circuit 950 to the storage 960. Coupling 955 may further couple the processor circuit 950 to one or more of the interface 990 and the display interface 985 (depending on which of these and/or other components are also present). With the processor circuit 950 being so coupled by couplings 955, the processor circuit 950 is able to perform the various ones of the tasks described at length, above, for whichever ones of the computing devices 100, 300a-c, 500 or 800 implement the processing architecture 3100. Coupling 955 may be implemented with any of a variety of technologies or combinations of technologies by which signals are optically and/or electrically conveyed. Further, at least portions of couplings 955 may employ timings and/or protocols conforming to any of a wide variety of industry standards, including without limitation, Accelerated Graphics Port (AGP), CardBus, Extended Industry Standard Architecture (E-ISA), Micro Channel Architecture (MCA), NuBus, Peripheral Component Interconnect (Extended) (PCI-X), PCI Express (PCI-E), Personal Computer Memory Card International Association (PCMCIA) bus, HyperTransport™, QuickPath, and the like.

As previously discussed, the processor circuit 950 (corresponding to one or more of the processor circuits 150, 350, 550 or 850) may comprise any of a wide variety of commercially available processors, employing any of a wide variety of technologies and implemented with one or more cores physically combined in any of a number of ways.

As previously discussed, the storage 960 (corresponding to one or more of the storages 160, 360, 560 or 860) may comprise one or more distinct storage devices based on any of a wide variety of technologies or combinations of technologies. More specifically, as depicted, the storage 960 may comprise one or more of a volatile storage 961 (e.g., solid state storage based on one or more forms of RAM technology), a non-volatile storage 962 (e.g., solid state, ferromagnetic or other storage not requiring a constant provision of electric power to preserve their contents), and a removable media storage 963 (e.g., removable disc or solid state memory card storage by which information may be conveyed between computing devices). This depiction of the storage 960 as possibly comprising multiple distinct types of storage is in recognition of the commonplace use of more than one type of storage device in computing devices in which one type provides relatively rapid reading and writing capabilities enabling more rapid manipulation of data by the processor circuit 950 (but possibly using a "volatile" technology constantly requiring electric power) while another type provides relatively high density of non-volatile storage (but likely provides relatively slow reading and writing capabilities).

Given the often different characteristics of different storage devices employing different technologies, it is also commonplace for such different storage devices to be coupled to other portions of a computing device through different storage controllers coupled to their differing storage devices through different interfaces. By way of example, where the volatile storage 961 is present and is based on RAM technology, the volatile storage 961 may be communicatively coupled to coupling 955 through a storage controller 965a providing an appropriate interface to the volatile storage 961 that perhaps employs row and column addressing, and where the storage controller 965a may perform row refreshing and/or other maintenance tasks to aid in preserving information stored within the volatile storage 961. By way of another example, where the non-volatile storage 962 is present and comprises one or more ferromagnetic and/or solid-state disk drives, the non-volatile storage 962 may be communicatively coupled to coupling 955 through a storage controller 965b providing an appropriate interface to the non-volatile storage 962 that perhaps employs addressing of blocks of information and/or of cylinders and sectors. By way of still another example, where the removable media storage 963 is present and comprises one or more optical and/or solid-state disk drives employing one or more pieces of machine-readable storage media 969, the removable media storage 963 may be communicatively coupled to coupling 955 through a storage controller 965c providing an appropriate interface to the removable media storage 963 that perhaps employs addressing of blocks of information, and where the storage controller 965c may coordinate read, erase and write operations in a manner specific to extending the lifespan of the machine-readable storage media 969.

One or the other of the volatile storage 961 or the non-volatile storage 962 may comprise an article of manufacture in the form of a machine-readable storage media on which a routine comprising a sequence of instructions executable by the processor circuit 950 may be stored, depending on the technologies on which each is based. By way of example, where the non-volatile storage 962 comprises ferromagnetic-based disk drives (e.g., so-called "hard drives"), each such disk drive typically employs one or more rotating platters on which a coating of magnetically responsive particles is deposited and magnetically oriented in various patterns to store information, such as a sequence of instructions, in a manner akin to removable storage media such as a floppy diskette. By way of another example, the non-volatile storage 962 may comprise banks of solid-state storage devices to store information, such as sequences of instructions, in a manner akin to a compact flash card. Again, it is commonplace to employ differing types of storage devices in a computing device at different times to store executable routines and/or data. Thus, a routine comprising a sequence of instructions to be executed by the processor circuit 950 may initially be stored on the machine-readable storage media 969, and the removable media storage 963 may be subsequently employed in copying that routine to the non-volatile storage 962 for longer term storage not requiring the continuing presence of the machine-readable storage media 969 and/or the volatile storage 961 to enable more rapid access by the processor circuit 950 as that routine is executed.

As previously discussed, the interface 990 (corresponding to one or more of the interfaces 190, 390, 590 and 890) may employ any of a variety of signaling technologies corresponding to any of a variety of communications technologies that may be employed to communicatively couple a computing device to one or more other devices. Again, one or both of various forms of wired or wireless signaling may be employed to enable the processor circuit 950 to interact with input/output devices (e.g., the depicted example keyboard 920 or printer 970) and/or other computing devices, possibly through a network (e.g., the network 999) or an interconnected set of networks. In recognition of the often greatly different character of multiple types of signaling and/or protocols that must often be supported by any one computing device, the interface 990 is depicted as comprising multiple different interface controllers 995a, 995b and 995c. The interface controller 995a may employ any of a variety of types of wired digital serial interface or radio frequency wireless interface to receive serially transmitted messages from user input devices, such as the depicted keyboard 920 (perhaps corresponding to one or more of the controls 120, 320 and 820). The interface controller 995b may employ any of a variety of cabling-based or wireless signaling, timings and/or protocols to access other computing devices through the depicted network 999 (perhaps a network comprising one or more links, smaller networks, or perhaps the Internet). The interface 995c may employ any of a variety of electrically conductive cabling enabling the use of either serial or parallel signal transmission to convey data to the depicted printer 970. Other examples of devices that may be communicatively coupled through one or more interface controllers of the interface 990 include, without limitation, microphones, remote controls, stylus pens, card readers, finger print readers, virtual reality interaction gloves, graphical input tablets, joysticks, other keyboards, retina scanners, the touch input component of touch screens, trackballs, various sensors, laser printers, inkjet printers, mechanical robots, milling machines, etc.

Where a computing device is communicatively coupled to (or perhaps, actually comprises) a display (e.g., the depicted example display 980, corresponding to one or more of the displays 180, 380 and 880), such a computing device implementing the processing architecture 3100 may also comprise the display interface 985. Although more generalized types of interface may be employed in communicatively coupling to a display, the somewhat specialized additional processing often required in visually displaying various forms of content on a display, as well as the somewhat specialized nature of the cabling-based interfaces used, often makes the provision of a distinct display interface desirable. Wired and/or wireless signaling technologies that may be employed by the display interface 985 in a communicative coupling of the display 980 may make use of signaling and/or protocols that conform to any of a variety of industry standards, including without limitation, any of a variety of analog video interfaces, Digital Video Interface (DVI), DisplayPort, etc.

More generally, the various elements of the devices 100, 300a-c, 500 and 800 may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Further, some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims. The detailed disclosure now turns to providing examples that pertain to further embodiments. The examples provided below are not intended to be limiting.

An example of an apparatus comprises a processor circuit, an interface operative to communicatively couple the processor circuit to a network, and a storage communicatively coupled to the processor circuit and arranged to store instructions. The instructions are operative on the processor circuit to transmit timing information via the network to a first participating device having a first display and a second participating device having a second display to trigger the first participating device to capture what is visually presented on the first display as a first image and the second participating device to capture what is visually presented on the second display as a second image substantially simultaneously; and transmit collection device information via the network to the first and second participating devices specifying a collection device to receive the first and second images.

The above example of an apparatus in which the timing information specifies a trigger time; and a time server to enable the first participating device to signal the time server to synchronize a clock of the first participating device to a clock of the time server, and to enable the second participating device to signal the time server to synchronize a clock of the second participating device to the clock of the time server.

Either of the above examples of an apparatus in which the timing information instructs the first and second participating devices to await a common trigger signal from the apparatus to trigger the first participating device to capture the first image and the second participating device to capture the second image, and the instructions operative on the processor circuit to transmit the common trigger signal via the network.

Any of the above examples of an apparatus in which the apparatus comprises the collection device.

Any of the above examples of an apparatus in which the instructions are operative on the processor circuit to receive the first image from the first participating device and to receive the second image from the second participating device via the network.

Any of the above examples of an apparatus in which the instructions are operative on the processor circuit to aggregate at least the first and second images into an aggregate image.

Any of the above examples of an apparatus in which the instructions are operative on the processor circuit to access a selection data identifying the first and second participating devices as associated with a common account; and select the first and second participating devices to participate in a multiple-device screen capture based on the selection data.

Any of the above examples of an apparatus in which the instructions are operative on the processor circuit to access a selection data identifying the first and second participating devices as permitted to participate in a multiple-device screen capture; signal the first and second participating devices via the network to each present a request for agreement to participate in the multiple-device screen capture; receive signals via the network from the first and second participating devices indicating responses to the requests; and select the first and second participating devices to participate in the multiple-device screen capture based on the responses.

An example of another apparatus comprises a processor circuit; a display, an interface operative to communicatively couple the processor circuit to a network, and a storage communicatively coupled to the processor circuit and arranged to store instructions. The instructions are operative on the processor circuit to receive collection device information via the network specifying a collection device; receive timing information via the network specifying a time server and a trigger time; signal the time server via the network to synchronize a clock of the apparatus with a clock of the timer server; capture what is visually presented on the display as a first image in response to arrival of the trigger time; and transmit the first image to the collection device via the network.

The above example of another apparatus in which the instructions are operative on the processor circuit to receive a signal from another computing device via the network to present a request for agreement for the apparatus to participate in a multiple-device screen capture; present the request; receive a response to the request; and transmit an indication of the response to the other computing device via the network.

Either of the above examples of another apparatus in which the instructions are operative on the processor circuit to receive an indication via the network of a color space to which the first image is required to adhere, and convert the first image to the color space before transmitting the first image to the collection device.

Any of the above examples of another apparatus in which the instructions are operative on the processor circuit to receive an indication via the network of a color depth to which the first image is required to adhere, and convert the first image to the color depth before transmitting the first image to the collection device.

Any of the above examples of another apparatus in which the instructions are operative on the processor circuit to receive a second image from the collection device via the network.

Any of the above examples of another apparatus in which the instructions are operative on the processor circuit to aggregate the first and second images into an aggregate image.

An example of a computer-implemented method comprises receiving a signal conveying a command to perform a multi-device screen capture at a first participating device having a first display; transmitting timing information via a network to a second participating device having a second display to trigger the first participating device to capture what is visually presented on the first display as a first image and the second participating device to capture what is visually presented on the second display as a second image substantially simultaneously; and transmitting collection device information via the network to the second participating device specifying a collection device to receive the second image.

The above example of a computer-implemented method in which the signal conveying the command to perform a multi-device screen capture received from a manually-operable control of the first participating device.

Either of the above examples of a computer-implemented method in which the timing information instructing the second participating device to await a trigger signal via the network to trigger the second participating device to capture the second image; and the method comprising transmitting the trigger signal via the network.

Any of the above examples of a computer-implemented method in which the method comprises accessing a selection data identifying the second participating device as permitted to participate in a multiple-device screen capture; signaling the second participating device via the network to present a request for agreement to participate in the multiple-device screen capture; receiving a signal via the network from the second participating device indicating a response to the request; and selecting the second participating device to participate in the multiple-device screen capture based on the response.

Any of the above examples of a computer-implemented method in which the method comprises signaling a time server to synchronize a first clock of the first participating device with a clock of the time server.

Any of the above examples of a computer-implemented method in which the timing information specifies a trigger time; and a time server to enable the second participating device to signal the time server to synchronize a second clock of the second participating device with the clock of the time server.

Any of the above examples of a computer-implemented method in which the collection device information specifies the first participating device as the collection device.

Any of the above examples of a computer-implemented method in which the method comprises receiving the second image from the second participating device via the network at the first participating device.

Any of the above examples of a computer-implemented method in which the method comprises aggregating the first and second images into an aggregate image.

An example of another computer-implemented method comprises receiving collection device information via a network specifying a collection device; receiving timing information via the network specifying a time server and a trigger time; signaling the time server via the network to synchronize a clock with a clock of the timer server; capturing at least a portion of what is visually presented on a display as a first image in response to arrival of the trigger time; and transmitting the first image to the collection device via the network.

The above example of another computer-implemented method in which the method comprise receiving a signal from another computing device via the network to present a request for agreement to participate in a multiple-device screen capture; presenting the request; receiving a response to the request; and transmitting an indication of the response to the other computing device via the network.

Either of the above examples of another computer-implemented method in which the method comprises receiving an indication via the network of a color space to which the first image is required to adhere, and converting the first image to the color space before transmitting the first image to the collection device.

Any of the above examples of another computer-implemented method in which the method comprises receiving an indication via the network of a color depth to which the first image is required to adhere, and converting the first image to the color depth before transmitting the first image to the collection device.

Any of the above examples of another computer-implemented method in which the method comprises receiving a second image from the collection device via the network, and aggregating the first and second images into an aggregate image.

An example of at least one machine-readable storage medium comprises instructions that when executed by a computing device, cause the computing device to receive collection device information via a network specifying a collection device; receive timing information via the network specifying a time server and a trigger time; signal the time server to synchronize a clock of the computing device with a clock of the timer server; capture what is visually presented on a display of the computing device as a first image in response to arrival of the trigger time; and transmit the first image to the collection device via the network.

The above example of at least one machine-readable storage medium in which the computing device is caused to receive a signal from another computing device via the network to present a request for agreement for the computing device to participate in a multiple-device screen capture; present the request; receive a response to the request; and transmit an indication of the response to the other computing device via the network.

Either of the above examples of at least one machine-readable storage medium in which the computing device is caused to receive a second image from another computing device via the network.

Any of the above examples of at least one machine-readable storage medium in which the computing device is caused to aggregate the first and second images into an aggregate image.

An example of at least one other machine-readable storage medium comprises instructions that when executed by a computing device, cause the computing device to transmit timing information via a network to a first participating device having a first display and a second participating device having a second display to trigger the first participating device to capture at least a portion of what is visually presented on the first display as a first image and the second participating device to capture at least a portion of what is visually presented on the second display as a second image substantially simultaneously; and transmit collection device information via the network to the first and second participating devices specifying a collection device to receive the first and second images.

The above example of at least one other machine-readable storage medium in which the timing information specifies a trigger time; and a time server to enable the first participating device to signal the time server to synchronize a clock of the first participating device to a clock of the time server, and to enable the second participating device to signal the time server to synchronize a clock of the second participating device to the clock of the time server.

Either of the above examples of at least one other machine-readable storage medium in which the timing information instructs the first and second participating devices to await a common trigger signal from the apparatus to trigger the first participating device to capture the first image and the second participating device to capture the second image, and the computing device is caused to transmit the common trigger signal via the network.

Any of the above examples of at least one other machine-readable storage medium in which the collection device information specifies the computing device as the collection device, and the computing device is caused to receive the first image from the first participating device and to receive the second image from the second participating device via the network and to aggregate at least the first and second images into an aggregate image.

Any of the above examples of at least one other machine-readable storage medium in which the computing device is caused to access a selection data identifying the first and second participating devices as associated with a common account; and select the first and second participating devices to participate in a multiple-device screen capture based on the selection data.

Any of the above examples of at least one other machine-readable storage medium in which the computing device caused to access a selection data identifying the first and second participating devices as permitted to participate in a multiple-device screen capture; signal the first and second participating devices via the network to each present a request for agreement to participate in the multiple-device screen capture; receive signals via the network from the first and second participating devices indicating responses to the requests; and select the first and second participating devices to participate in the multiple-device screen capture based on the responses.

The following section of the description consists of numbered paragraphs simply providing statements of the invention already described herein. The numbered paragraphs in this section are not claims. The claims are set forth below in the later section headed "claims".
1. An apparatus comprising: a processor circuit; an interface operative to communicatively couple the processor circuit to a network; and a storage communicatively coupled to the processor circuit and arranged to store a sequence of instructions operative on the processor circuit to: transmit timing information via the network to a first participating device having a first display and a second participating device having a second display to trigger the first participating device to capture at least a portion of what is visually presented on the first display as a first image and the second participating device to capture at least a portion of what is visually presented on the second display as a second image substantially simultaneously; and transmit collection device information via the network to the first and second participating devices specifying a collection device to receive the first and second images.
2. The apparatus of clause 1, the timing information specifying: a trigger time; and a time server to enable the first participating device to signal the time server to synchronize a clock of the first participating device to a clock of the time server, and to enable the second participating device to signal the time server to synchronize a clock of the second participating device to the clock of the time server.
3. The apparatus of clause 1, the timing information instructing the first and second participating devices to await a common trigger signal from the apparatus to trigger the first participating device to capture the first image and the second participating device to capture the second image, and the instructions operative on the processor circuit to transmit the common trigger signal via the network.
4. The apparatus of clause 1, the apparatus comprising the collection device, the instructions operative on the processor circuit to: receive the first image from the first participating device; receive the second image from the second participating device via the network; and aggregate at least the first and second images into an aggregate image.
5. The apparatus of clause 1, the instructions operative on the processor circuit to: access a selection data identifying the first and second participating devices as associated with a common account; and select the first and second participating devices to participate in a multiple-device screen capture based on the selection data.
6. The apparatus of clause 1, the instructions operative on the processor circuit to: access a selection data identifying the first and second participating devices as permitted to participate in a multiple-device screen capture; signal the first and second participating devices via the network to each present a request for agreement to participate in the multiple-device screen capture; receive signals via the network from the first and second participating devices indicating responses to the requests; and select the first and second participating devices to participate in the multiple-device screen capture based on the responses.
7. An apparatus comprising: a processor circuit; a display; an interface operative to communicatively couple the processor circuit to a network; and a storage communicatively coupled to the processor circuit and arranged to store a sequence of instructions operative on the processor circuit to: receive collection device information via the network specifying a collection device; receive timing information via the network specifying a time server and a trigger time; signal the time server via the network to synchronize a clock of the apparatus with a clock of the timer server; capture at least a portion of what is visually presented on the display as a first image in response to arrival of the trigger time; and transmit the first image to the collection device via the network.
8. The apparatus of clause 7, the instructions operative on the processor circuit to: receive a signal from another computing device via the network to present a request for agreement for the apparatus to participate in a multiple-device screen capture; present the request; receive a response to the request; and transmit an indication of the response to the other computing device via the network.
9. The apparatus of clause 7, the instructions operative on the processor circuit to: receive an indication via the network of a color space to which the first image is required to adhere; and convert the first image to the color space before transmitting the first image to the collection device.
10. The apparatus of clause 7, the instructions operative on the processor circuit to: receive an indication via the network of a color depth to which the first image is required to adhere; and convert the first image to the color depth before transmitting the first image to the collection device.
11. The apparatus of clause 7, the instructions operative on the processor circuit to receive a second image from another computing device via the network, and to aggregate the first and second images into an aggregate image.
12. A computer-implemented method comprising: receiving a signal conveying a command to perform a multi-device screen capture at a first participating device having a first display; transmitting timing information via a network to a second participating device having a second display to trigger the first participating device to capture at least a portion of what is visually presented on the first display as a first image and the second participating device to capture at least a portion of what is visually presented on the second display as a second image substantially simultaneously; and transmitting collection device information via the network to the second participating device specifying a collection device to receive the second image.
13. The computer- implemented method of clause 12, the signal conveying the command to perform a multi-device screen capture received from a manually-operable control of the first participating device.
14. The computer-implemented method of clause 12, the timing information instructing the second participating device to await a trigger signal via the network to trigger the second participating device to capture the second image; and the method comprising transmitting the trigger signal via the network.
15. The computer-implemented method of 12, comprising: accessing a selection data identifying the second participating device as p participate in a multiple-device screen capture; signaling the second participating device via the network to present a request for agreement to participate in the multiple-device screen capture; receiving a signal via the network from the second participating device indicating a response to the request; and selecting the second participating device to participate in the multiple-device screen capture based on the response.
16. The computer-implemented method of clause 15, the request comprising an indication that at least one of the first and second images will not comprise all of what is visually presented on a display.
17. The computer-implemented method of clause 12, comprising signaling a time server to synchronize a first clock of the first participating device with a clock of the time server.
18. The computer- implemented method of clause 17, the timing information specifying: a trigger time; and a time server to enable the second participating device to signal the time server to synchronize a second clock of the second participating device with the clock of the time server.
19. The computer-implemented method of clause 12, the collection device information specifying the first participating device as the collection device, and the method comprising: receiving the second image from the second participating device via the network at the first participating device; and aggregating the first and second images into an aggregate image.
20. At least one machine-readable storage medium comprising instructions that when executed by a computing device, cause the computing device to perform the method of any of clauses 12-19.

## Claims

1. A method to manage images, comprising:
initiating participation in a multiple-device visual presentation by a first mobile device and a second mobile device;
sending a first image from the first mobile device to the second mobile device via a network;
receiving a second image from the second mobile device by the first mobile device via the network; and
sending timing information to trigger capture of the first and second images, the timing information to comprise a common trigger signal to instruct the first and second mobile devices to trigger capture of the first and second images, respectively, at substantially a same time.

2. The method of claim 1, wherein the first and second mobile devices are associated with a common account.

3. The method of claim 1 or 2, wherein the first and second images are visually presented on a display for each of the first and second mobile devices, respectively, at a given time.

4. The method of any of claims 1 to 3, comprising capturing the first image in accordance with the timing information.

5. The method of any of claims 1 to 4, comprising sending a captured first image from the first mobile device to a server or the second mobile device via the network.

6. The method of any of claims 1 to 5, comprising receiving a captured second image from the second mobile device or a server via the network.

7. The method of any of claims 1 to 6, comprising aggregating a first captured image and a second captured image from the first mobile device and the second mobile device, respectively.

8. The method of any of claims 1 to 7, comprising accessing selection data to identify the first and second mobile devices for the multiple-device visual presentation.

9. The method of any of claims 1 to 8, comprising signaling the second mobile device to present a request for agreement to participate in the multiple-device visual presentation.

10. The method of any of claims 1 to 9, comprising receiving a signal from the second mobile device to indicate a response to a request for agreement to participate in the multiple-device visual presentation.

11. The method of any of claims 1 to 10, comprising identifying the second mobile device based on a response to a request for agreement to participate in the multiple-device visual presentation.

12. A system to manage images, the system comprising a processor communicatively coupled to computer-readable storage including computer-readable instructions, when executed, to implement a method as claimed in any preceding claim.

13. An apparatus comprising means to perform a method as claimed in any preceding claim.

14. Machine-readable storage including machine-readable instructions, when executed, to implement a method or realize an apparatus as claimed in any preceding claim.
